# EUROPEAN PATENT APPLICATION

(11) **EP 4 119 211 A1**
(43) Date of publication of application: **18.01.2023**
(21) Application number: 21398010.5
(22) Date of filing: 12.07.2021
(51) Int. Cl.: B01D 17/02, B01D 21/00, C10B 53/02, C10C 5/00

(54) **METHOD TO AVOID PIPING CLOGGING AND PROMOTE TAR SEPARATION FROM PYROLIGNEOUS LIQUIDS IN PYROLYSIS PLANTS**

(71) Applicant: BGW, S.A., 3250-121 Alvaiázere (PT)
(72) Inventor: De Almeida Ferreirinha, Pedro Luis, 3660-694 São Pedro do Sul (PT)
(74) Representative: Ferreira Magno, Fernando Antonio

(57) **Abstract**

The present invention relates to provide a method and arrangemente to avoid piping clogging by means of washing and cooling the gases and vapors immediately when they come out from the pyrolysis reactors, and promote continuous tar separation, as the crude condensed liquid after condensation flows through two decanters in series where the second one is chilled, with a residence time of 8 hours or less, comprising the steps of:Cooling and washing gases and vapors: passing gases and vapors from pyrolysis through liquid curtains of pyroligneous liquid;
cooling of washing liquid and condensation of gases and vapors from pyrolysis in a condenser heat exchanger; pumping, the colder pyroligneous liquid by a recirculation pump from condensed liquids tank at high level to avoid tars from the bottom and feed the injectors nozzles;pumping the crude condensed liquid after condensation to a vertical decanter to separate most of the heavy tars to a tar reservoir, and the more aqueous fraction leaves this equipment and goes to the cooled decanter and subjected to cold decantation by thermal shock in surfaces at -15°C, rest for 6 hours at a temperature of 4°C ± 2.5°C, and second thermal shock on surfaces at -15°C, filtration and physical separation.

## Description

### Field of the invention

The present invention relates to a method and arrangement to avoid piping clogging and promote tar separation from pyroligneous liquids in pyrolysis plants.

### Prior art

Recovery of chemicals from the vapors given off when wood is converted to charcoal was once a flourishing industry. However, as soon as petrochemicals appeared on the scene, wood as a source of methanol, acetic acid, speciality tars and preservatives became uneconomic. Wherever charcoal is made the possibility of recovering by-products is discussed. Present demand for product biobased, and emsissions reduction pressure can be advanced as an argument.

Recovery of by-product chemicals from wood distillation can appear promising, there are possibilities of recovering tars and using the wood gas as fuel to assist in making the carbonization process more efficient, and since recovery of by-products does reduce atmospheric pollution from wood carbonization, the combined benefit makes it worthwhile having a closer look at the possibilities in the direction of a combined benefit.

If wood is heated in air absence, when the wood is dry its temperature rises and at about 270°C it begins to spontaneously decompose and, at the same time, heat is generated. At this stage, the formationof the by-products of wood carbonization starts. These substances are gradually released as the temperature rises and at about 450°C the process is complete. The solid residue, charcoal, is mainly carbon (about 70%) and only by increasing the temperature above about 600°C can small amounts of tar be eliminated or decomposed completely.

The result of this thermochemical treatment is the obtention of three fractions at different stages of the matter, a fraction composed of solid products, the charcoal, another fraction composed of liquid products, from condensable volatile products and, another fraction composed of non-condensable volatile products, that is, gases from the thermochemical treatment ofbiomass.

Usually, the condensable products are separated by rest into three layers: a lower layer formed by pure tar, an aqueous intermediate layer, where there can be found the acetic acid, methyl alcohol, acetone and dissolved soluble tars, and a thin upper layer of light oils. The intermediate layer is called acid or pyroligneous liquid. The rest period prior to the decanting process for separation of the mentioned layers is generally comprised between 6 to 18 months, depending on the thermal and lighting conditions to which the layers are subjected.

In future will probably see some increased recovery of tar for sale and the use of the off gases and vapors from carbonization plants for heating of pyrolysis reactors and boilers. How to do this effectively without big investment in plant, remains largely an unsolved problem.

The crude condensed liquid is decanted to separate insoluble tar, ususally to (obtain) an efficient separation is needed several months of condensed liquid absolute rest are necessary, for this, large reservoirs capable of storing all the liquids in a plant for several months are needed, which means large investments in reservoirs, other way is do evaporation of water that is costly as it requires a large fuel input.

Regardless of the charcoal production system when it is intended to collect the vapors given off when wood is converted to charcoal, hot pyrolysis gas and vapor leaves the pyrolysis reactors or pyrolysis bed losse temperature and the mixture will easily condense and form tar, causing piping clogging and affecting normal operation, and the plant become uneconomic.

### Object of the invention

The invention has for its object a method to avoid piping clogging by means of washing and cooling the gases and vapor when they come out from the pyrolysis reactors, and promote tar separation, passing the crude condensed liquid.

The purpose of this invention is thus to ensure operational availability by doing continuous cleaning and avoiding the piping clogging in charcoal installations that make use of pyrolysis gases and vapors and allow the continuous and efective separation of insoluble tar from crude condensed liquid by means of two decanters in series, the second is cooled and with a residence time of less than 8 hours.

### Summary of the Invention

The present invention provides a simpler, more efficient and faster method to avoid piping clogging by means of washing and cooling the gases and vapor when they come out from the pyrolysis reactors, and promote tar separation, passing the crude condensed liquid after condensation in two decanters in serie where the second one is chilled, with a residence time of 8 hours or less and passing the raw condensed liquid through an arrangement for carrying out the refered method.

This invention allows the continuous flow separation of pyroligneous liquids into the organic and aqueous fractions without having to subject the pyroligneous liquids to long rest periods of months for further separation.

This invention solves two problems that, sometimes, make projects technically and economically unfeasible which occur when is done the exploitation of the pyroligneous liquids in pyrolysis plants, which are:
the clogging with the tar which is deposited on the walls of the piping traversed by the vapors and gases leaving from the pyrolysis reactors; and
the enormous liquid storage needs associated with the rest time required for the stratification of the liquids for the subsequent separation by decantation.

The problem of piping clogging is overcome by means of washing and cooling the gases and vapor when they come out from the pyrolysis reactors, applying a recirculation system of piroligneous liquid using nozzles to inject liquid that washes tarry gases and vapors avoidding they touch the piping walls and be sticken there.

The problem associated with the huge storage volumes required to the rest period of liquids is solved by passing the crude condensed liquid after condensation in two decanters in serie where the first promote the separation of the major part of heavy tars, and the second one is chilled by refrigeration circuits, and with labirintic passage of liquid, with a residence time of 8 hours or less.

### Brief Description of Drawings

The characteristics of the present invention will become apparent from the description of the presently preferred embodiment, given as a non-limiting example of the invention and with reference to the accompanying drawings, in which:
Fig. 1 is a schematic diagram of the general operation of the method of the present invention applied to two pyrolysis reactors, as well as the arrangement for carrying out said method.
Fig. 2 is a schematic view of the connection of the washing and cooling pipe of the chilled decanter.

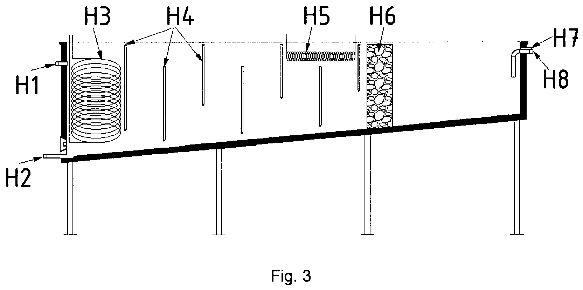

Fig. 3 is a schematic view and sectional view of the chilled decanter.

### Detailed Description of the Invention

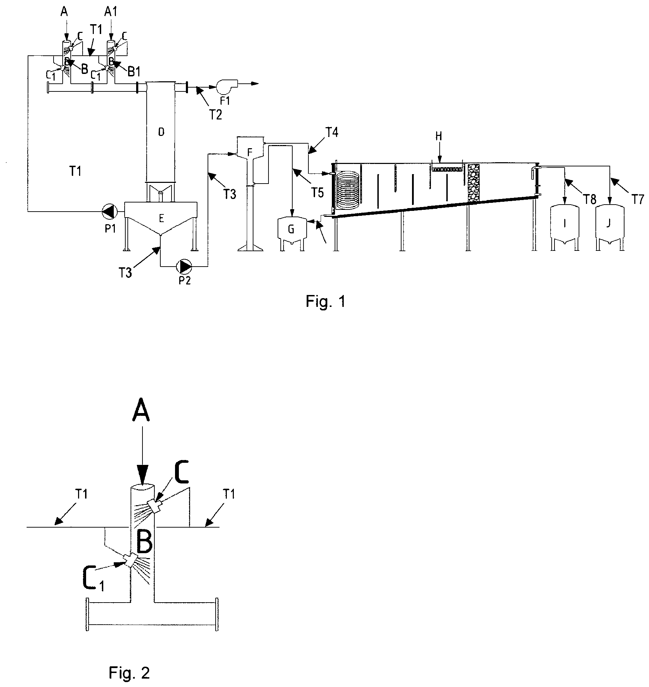

As exemple applied for two pyrolysis reactors the method to avoid piping clogging by means of washing and coolding the gases and vapor immediately when they come out from the pyrolysis reactors of the present invention will hereinafter be described in conjunction with the schematic diagram shown in Fig. 1 and Fig. 2.

The pyrolysis reactor exit duct (A, A1) where that leaves the pyrolysis gases and vapors before the loss of temperature, these must be immediately connected to a vertical or oblique connection duct (B,B1) section that allows the gravitational flow of liquids, with two or more injector nozzles (C,C1) on opposite sides and at different levels being applied to this duct section, the injector will apply pyroligneous liquid making a sort of curtains while the gases and vapors pass through them, washing before they cooling and touch the duct walls.

The gases and vapors from pyrolysis, when washed by a colder liquid, cool and precipitate the tar that will be dragged by the movement of the washing liquid to the condenser or can be collected directly in the condensate reservoir plants architecture.

The colder pyroligneous liquid is pumped by a recirculation pump (P1) from condensed liquids tank (E) at high level to avoid tars from tank botton and feed the injector nozzles (C,C1).

Vapor and gases not condensed are drived to a condenser heat exchanger (D) that ensure that all the condensation of the condensable gases, with the non-condensable gases being sent through conduit (T2) using an (Fl) fan to be used as fuel to generate heat, helping to make the carbonization process more efficient. In another way not shown, the fan (F1) could be eliminated.

The method to avoid the huge storage volumes required to the rest period of liquids for the stratification and subsequent separation by decantation of the present invention will hereinafter be described in conjunction with the schematic diagram shown in Fig.1 and Fig.2.

The crude condensed liquid after condensation present in tank (E) are sent thru a conduit (T3) and a pump (P2) interposed in conduit T3 to a vertical decanter F, where most of the heavy tars are separated, which are sent through from conduit (T5) by gravity to a tar reservoir G. In another embodiment not shown, most of the heavy tars may be shipped by a pump placed in conduit (T5). The more aqueous fraction from the decanter (F) is sent by gravity through conduit T4 to the chilled decanter (H). In another way not shown, the delivery of the more aqueous fraction from the decanter (F) may be done by a pump placed in the conduit (T4).

In the chilled decanter (H) thermally insulated with a primary refrigeration circuit H3 and a secondary refrigeration circuit (H5), with several loops each, pyroligneous liquid enters in the inlet (H1), get an thermal chock to negative temperatures when get in touch with primary refrigeration circuit (H3) at temperature of about -10°C to -20°C, preferably at -15°C, after leaving this entrance zone through the lower level, it flows slowly in labirintic way between deflectors (H4) to realize a permanence with an average duration of 8 hours at a temperature of 4°C ± 2,5°C, during this flows occurs the precipitation of the light tar that as it passes in the secondary refrigerantion circuit (H5) at temperature of about -10°C to -20°C, preferably at -15°C, gets a downward movement due to cooldown that makes it go to the bottom. After this pass through a coal filter (H6) that works like a trap with big surface area that promote catch in case it doesn't precipitate before. After the rest time referd and passing through the (H6) filter, the aqueous fraction of the pyroligneous liquid having tar contents less than 0.2% reaches the (H8) outlet, being sent through the (T8) conduit to the clean pyroligneous liquid reservoir I, while the light oils reach outlet H7 and are drained through conduit (T7) to the light oil reservoir (J) .

Tar is released through the outlet (H2) and passes through conduit (T6) by gravity to the tar reservoir (G), using a valve controlled by a tar level sensor inside the decanter H. to the tar tank (G) using a valve that can be controlled by a sensor of tar level inside equipment. Pyroligneous liquid without tar exits through outlet (H8) to tank (I) while light oils exits through outlet (H7) and go to tank (J).

### Alphanumeric Reference List

- A, A1: Pyrolysis Reactor exit duct
- B, B1: Washing and cooling Connection duct
- C, C1: Injector nozzle
- D: Condenser heat exchanger
- E: Condensed liquid tank
- F: Vertical decanter
- F1: Fan
- G: Tar tank
- H: Chilled decanter
- H1: Entrance connection
- H2: Tar exit connection
- H3: Primary refrigeration circuit
- H4: Deflectors
- H5: Secondary refrigeration circuit
- H6: Coal filter
- H7: Light oils exit connection
- H8: Pyroligneous liquid exit connection
- I: Clean pyroligneous liquid tank
- J: Light oils tank

## Claims

1. Method to avoid piping clogging and promote the separation of tar from pyroligneous liquids inpyrolysis plants, comprising the following steps:
Cooling and washing gases and vapors from pyrolysis immediately after pyrolysis reactor exit by passing gases and vapors from pyrolysis through liquid curtains of pyroligneous liquid, in which the pyrolysis reactor outlet conduit (A, A1) of the Pyrolysis gases and vapors are connected immediately after the exit of the pyrolysis reactor to a vertical or oblique connection conduit (B, B1), which allows the gravitational flow of liquids;
application by means of two or more injector nozzles (C, C1) of pyroligneous liquid, on opposite sides and at different levels in the refered conduit, so as to form the refered liquid curtains through which the refered gases and vapors pass;
passage of the refered pyroligneous liquid coming from the vertical or oblique connection conduit (B, B1) together with the refered cooled pyrolysis gases and vapors, after the refered washing and cooling, and the tar being precipitated and dragged by the refered pyrolysis liquid to the heat exchanger and condenser (D) where the refered pyroligneous liquid is cooled where condensable gases and vapors are condensed and non-condensable gases exit the conduit (T2) to be used as fuel;
Pumping, the refered pyroligneous liquid through a recirculation pump (P1) from condensed liquids tank (E) at high level to avoid aspiration of tars from the bottom until the injectors nozzles (C).
pumping of the pyroligneous liquid by means of a pump (P2) from the condensed liquid reservoir (E) to the vertical decanter (F);
decanting the refered condensed pyroligneous liquid in the refered vertical decanter (F), where an aqueous fraction and a fraction containing heavy tars are separated;
sending the aqueous fraction to the chilled decanter (H) by gravity or by means of a pump;
sending the fraction containing the heavy tars to a tar tank (G) by gravity or by means of a pump;
decanting with cooling of the aqueous fraction of the refered pyroligneous liquid after decanting in the refered vertical decanter (F),
first thermal shock of the refered aqueous fraction, in the refered decanter (H) by contact with the surfaces of the primary refrigeration circuit (H3) whose temperature is between -10°C to -20°C (-15°C);
slow flow in a labyrinthine path so that the refered fraction rests for a period of permanence with an average duration of 6 to 10 (8) hours at a temperature of 4°C ± 2.5°C,
precipitation of light tar during the refered period of permanence, when the refered fraction passes through the secondary refrigeration circuit (H5) at a temperature of -15°C
second thermal shock of the refered aqueous fraction by contact with the surfaces of the primary refrigeration circuit (H5) whose temperature is -15°C,
filtration with physical separation on the Coal filter (H6);
wherein after the refered aqueous fraction of the pyroligneous liquid has a tar content of less than 0.2% in mass, the light oils being drained through the outlet (H7) to the light oil tank (J), the pyroligneous liquid being without tar flowing through the outlet (H8) to the reservoir (I) and the tar being drained through the outlet (H2) to the tar reservoir (G).

2. Arrangement to prevent clogging of ducts and promote the separation of tar from pyroligneous liquids in pyrolysis plants, which comprises at least one vertical or oblique connection duct (B, B1) with at least two injector nozzles (C, C1), at least one condenser heat exchanger (D), at least one condensed liquid tank (E), at least one vertical decanter (F), at least one tar tank (G), at least chilled decanter (H), wherein the refered vertical or oblique connecting conduit (B, B1) receives gases and vapors from at least one pyrolysis reactor, through at least one pyrolysis reactor outlet conduit (A, A1), being the refered at least two injector nozzles (C, C1), fed by a pump (P1) through a conduit (T1), connected to refered, at least one condensed liquid reservoir (E), with the refered vertical or oblique connection conduit (B, B1) being connected to the referred, at least one heat exchanger and condenser (D), which is directly connected to at least one condensed liquid reservoir (E), which is connected through a conduit (T3) to at least one vertical decanter (F), being the upper part of the refered at least one vertical decanter (F) being connected through the conduit (T4) to, at least, one chilled decanter (H), being the lower part of the refered at least one vertical decanter (F) connected through the conduit (T5) to at least one tar reservoir (G), being the upper part of te referred at least one chilled decanter (H), connected through the conduit (T7), connected to the at least one light oil tank (J) and connected through the conduit (T8) to at least one reservoir of clean pyroligneous liquid (I), the lower part of the refered at least one chilled decanter (H), connected through the conduit (T6) to at least one tar reservoir (G), **characterized by** the refered the chilled decanter (H) comprises a primary refrigerant circuit (H3), deflectors (H4), a secondary refrigerant circuit (H5), and a filter (H6).
